# EUROPÄISCHE PATENTSCHRIFT

(11) **EP 2 389 282 B1**
(45) Veröffentlichungstag und Bekanntmachung des Hinweises auf die Patenterteilung: **02.07.2014**
(21) Anmeldenummer: 10700215.6
(22) Anmeldetag: 13.01.2010
(51) Int. Cl.: B29C 33/00, B29C 33/30, B29C 33/56, B29C 45/26, B29C 45/37, B29C 45/27, B29C 33/60, B29C 37/00, B29C 45/14, B29C 45/16

(54) **WERKZEUG UND VERFAHREN ZUR HERSTELLUNG VON MEHRSCHICHT-KUNSTSTOFFFORMTEILEN**
MOULD AND METHOD FOR PRODUCING MULTI-LAYER SHAPED PARTS OF PLASTIC
MOULE ET PROCÉDÉ DE PRODUCTION D'ARTICLES MOULÉS EN PLASTIQUE MULTICOUCHE

(30) Priorität: 21.01.2009 DE 102009005609
(43) Veröffentlichungstag der Anmeldung: 30.11.2011
(73) Patentinhaber: Bayer Intellectual Property GmbH, 40789 Monheim (DE)
(72) Erfinder: EHBING, Hubert, 51519 Odenthal (DE); BRÜNING, Dirk, 51377 Leverkusen (DE); PROTTE, Rainer, 41542 Dormagen (DE)
(74) Vertreter: BIP Patents
(86) Internationale Anmeldenummer: PCT/EP2010/000127
(87) Internationale Veröffentlichungsnummer: WO 2010/083959

(56) Entgegenhaltungen:
- WO-A1-2006/072366
- JP-A- 11 034 068
- JP-A- 57 012 607
- JP-A- 57 191 012
- JP-A- 61 016 823

## Beschreibung

Die Erfindung betrifft ein Werkzeug zur Herstellung von Mehrschichtkunststoffformteilen bestehend aus mindestens zwei Werkzeughälften und einer Kavität, in der der Kunststoff aufgenommen wird, und einem Angusssystem mit einem Angusskanal sowie ein Verfahren zur Herstellung von Mehrschichtkunststoffformteilen.

Die Herstellung von mehrschichtigen Kunststoffformteilen ist aus dem Stand der Technik bekannt. EP 197 496 B beschreibt ein Verfahren, bei dem zwischen zwei trennbaren Formwerkzeughälften ein Substrat eingespritzt wird. Sobald das Substrat ausreichend gehärtet ist, wird ein Überzug mit einem Druck wesentlich über den Formhohlraumdruck eingespritzt und über die gesamte Oberfläche oder über Oberflächenteilbereiche des Substrates gezwungen.

In DE 43 16 154 C ist ein Verfahren zur sichtseitigen Beschichtung eines Bauteils beschrieben. Bei diesem Verfahren wird das unbeschichtete Bauteil in ein spritzgussähnliches Formwerkzeug eingelegt und anschließend auf die sichtseitige Oberfläche unter Druck und Wärme ein Harz oder ein Lack aufgetragen. Während der gesamten Aushärtezeit wird auf das abbindende Harz bzw. auf den Lack ein zeitlich gleich bleibender Druck ausgeübt, der so gewählt ist, dass eventuell vorhandene Luft in dem flüssigen Harz bzw. Lack gelöst bleibt.

EP 934 808 A offenbart ein Verfahren zum Beschichten in einer Form, welches in einem ersten Schritt das Herstellen eines Formkörpers aus einem synthetischen Harz beispielsweise mit einem Spritzgießverfahren umfasst. Dies geschieht durch Anwenden eines Klemmdrucks auf eine Form, die eine fixierte und eine bewegliche Formhälfte besitzt. In einem zweiten Schritt wird der Klemmdruck vermindert oder die fixierte und die bewegliche Formhälfte auseinander genommen. Danach wird ein Beschichtungsmittel zwischen eine innere Oberfläche und die Oberfläche des Formkörpers in die Form eingespritzt. Das Aushärten des Beschichtungsmittels erfolgt unter einem speziellen Druckprofil.

WO 2006/072366 A offenbart ein Verfahren zum Formen und Beschichten eines Substrates in einem Formwerkzeug mit wenigstens zwei Kavitäten, wobei zunächst ein Substrat in einer Kavität in einem Formwerkzeug vorzugsweise mit einem Spritzgießverfahren geformt wird. Das hergestellte Substrat wird danach in eine zweite Kavität des Formwerkzeuges eingebracht und in einem weiteren Schritt mit einem Lack unter Druck beschichtet.

Bei den oben beschriebenen Verfahren werden vorzugsweise reaktive Harz- oder Lacksysteme zum Beschichten eingesetzt, die gut auf den Substraten haften müssen. Die Oberfläche der Beschichtung wird vorzugsweise durch ein metallisches Formwerkzeug abgebildet, an der zum Zwecke der guten Entformbarkeit keine Haftung der Beschichtung vorliegen soll. Daher werden im Stand der Technik auf die die Oberfläche abbildende Kavitätsinnenfläche häufig externe Trennmittel aufgebracht und/oder dem Beschichtungsmaterial selbsttrennende interne Trennmittel zugegeben und/oder eine selbsttrennende permanente Beschichtung der Kavitätsinnenoberfläche eingesetzt. Dies ist besonders für den Angussbereich des Formwerkzeuges notwendig, über den das Beschichtungsmaterial in die Kavität eingespritzt wird. Während des Einspritzvorganges liegen an dieser Stelle hohe Drucke und Scherkräfte vor, die dazu führen, dass das eingebrachte externe Trennmittel schnell abgetragen wird und die Trennwirkung an dieser Stelle rasch verloren geht.

Externe Trennmittelsysteme sind beispielsweise in Form von Lösungen oder Dispersionen bekannt, die üblicherweise auf die Oberfläche des Formteilwerkzeuges aufgesprüht werden. Derartige Trennmittelsysteme bestehen aus trennaktiven Wirkstoffen (beispielsweise Wachs) und einem Trägermedium, in der Regel organischen Lösemitteln oder Wasser. Die Verwendung von externen Trennmitteln wird beispielsweise in DE 1 131 873 A und DE 38 27 595 C offenbart.

Externe Trennmittel müssen häufig vor jedem Formteilherstellungsschritt in die Kavität eingebracht werden. Dies verursacht Produktionskosten und verlangsamt den Produktionsprozess. Zudem können die Trennmittel die Formteileigenschaften beeinflussen und verbleibende Reste auf der Oberfläche können in nachfolgenden Verarbeitungsschritten (Lackieren, Beschichten, Kaschieren usw.) Schwierigkeiten verursachen. Ferner können die Lösungsmittel aus den Trennmitteln in die Umwelt gelangen und die Gesundheit der Produktionsmitarbeiter gefährden.

Ein besonderer Nachteil bei der Verwendung von externen Trennmitteln insbesondere im Bereich des Angusses zur Ausbildung der Beschichtungsschicht besteht darin, dass durch den Einspritzvorgang das externe Trennmittel abgetragen und auf die Grenzfläche zwischen Trägersubstrat und Beschichtung transportiert wird. Schlechte Haftung zwischen dem Substrat und der Beschichtung sind dann die Folge.

Zusätzlich oder als Alternative können den Komponenten des Beschichtungssystems innere Trennmittel beigegeben werden. Eine derartige Vorgehensweise ist beispielsweise in DE 38 37 351 C beschrieben. Dort wird bei der Herstellung von Polyurethan- bzw. Polyharnstoffkörpern flüssiges Polybutadien der Polyol- bzw. der Polyaminkomponente beigegeben. Weitere Darstellungen dieser Vorgehensweise finden sich in "Innere Trennmittel für Polyurethan-Systeme", P. Horn, H.-U. Schmidt und G. Ramlow, Kunststoffberater 10/1987, S. 24 - 26 und in "Kunststoffhandbuch 7. Polyurethane", hrsg. von Günter Oertel, 3. neu bearb. Aufl., 1993, S. 370, Hanser-Verlag.

Nachteilig bei internen Trennmitteln ist, dass sie ihre trennende Wirkung auch gegenüber dem zu beschichtenden Substrat entfalten können. Eine gute Trennwirkung zum Werkzeug geht dann einher mit schlechter Haftung zum Substrat. Zudem können die internen Trennmittel die Eigenschaften der Beschichtung und mithin die des Bauteils erheblich beeinflussen. Ein nachträgliches Ausdiffundieren an die Oberfläche mit entsprechend negativen Konsequenzen für das Bauteil (Optik, Haptik, Emissionen aus dem Bauteil) kann nicht ausgeschlossen werden.

Weiterhin kommen beim Stand der Technik neben internen und externen Trennmitteln permanente Werkzeugbeschichtungen zum Einsatz. In EP 0 841 140 A und DE 100 34 737 A werden Verfahren zur Verbesserung des Ablösens des Formteils aus dem Formteilwerkzeug beschrieben, bei dem durch eine Plasmabeschichtung die Oberftächenenergie herabgesetzt wird. Diese Schichten sind so einzustellen, dass die Beschichtungssysteme keine chemischen Reaktionen mehr mit der Oberfläche eingehen. Derartige Trennschichten sind allerdings nicht ausreichend mechanisch stabil und besitzen zu kurze Standzeiten. Ein häufiges und entsprechend teures Erneuern der Beschichtung ist erforderlich. Da das Werkzeug hierfür aus dem Produktionsprozess herausgelöst werden muss, kommt es zudem zu einer längeren Produktionsunterbrechung.

Neben Plasmabeschichtungen werden im Stand der Technik auch Nickel- und Chrombeschichtungen beschrieben. Aus "Kunststoffhandbuch 7. Polyurethane", hrsg. von Günter Oertel, 3. neu bearb. Aufl., 1993, S. 362-363, Hanser-Verlag ist bekannt, zur Verbesserung der Oberflächenqualität von Formwerkzeugen eine chemische Vernickelung oder eine Hartbeschichtung des Formwerkzeuges vorzunehmen.

EP 0 973 960 B offenbart ein Verfahren zum Herstellen eines Formschaumteils in einem Formwerkzeug, dessen formgebende Oberflächen mit einer Antihaftbeschichtung auf Chrombasis in Form einer Galvanoschicht versehen ist. Zusätzlich wird ionisiertes Gas oder ein Gasgemisch in das Formwerkzeug eingeblasen.

Nachteilig bei den permanenten Antihaftbeschichtungen ist, dass ihre Wirkung im Zusammenhang mit Polyurethansystemen unzureichend ist, die Antihaftwirkung insbesondere bei Beschädigung schnell verloren geht und eine Erneuerung der Antihaftschicht erheblichen Aufwand in Verbindung mit einer längeren Produktionsunterbrechung bedeutet.

Weiterhin sind aus dem Stand der Technik Verfahren bekannt, bei denen mit herausnehmbaren Werkzeugeinsätzen gearbeitet wird. EP 1 320 451 B beschreibt ein Verfahren zur Herstellung von Formteilen unter zur Hilfenahme von herausnehmbaren Werkzeugteilen und mindestens einem herausnehmbaren elastischen Futter, das über die herausnehmbaren Werkzeugteile gelegt wird. Aufgabe des elastischen Futters ist es, Nahtabzeichnungen durch die herausnehmbaren Werkzeugteile auf dem Formteil zu vermeiden. Nachteilig ist, dass das elastische Futter bei jeder Formteilherstellung mit entformt und wieder neu eingelegt werden muss.

Diese bedeutet wiederum einen erhöhten Arbeitsaufwand.

Die Firma Cannon, Trezzano, Italy vertreibt eine Technologie unter dem Namen "Film & Foam" (http://www.thecannongroup.com/default.asp), bei der eine dünne Trennfolie in das Formwerkzeug vor der Formteilherstellung eingelegt wird. Diese Folie ist durch Tiefziehen im Formwerkzeug an die Oberflächenkontur des Formteils angepasst und ersetzt das Trennmittel. Nachteilig bei diesem Verfahren ist, dass die Strukturierung der Oberfläche durch die Eigenschaften der Folie begrenzt ist, Hinterschnitte nicht möglich sind, durch das Einlegen und Thermoformen der Folie zusätzliche Arbeitsschritte nötig sind und die Trennfolie nach einer gewissen Zeit als Abfall entsorgt werden muss.

Aufgabe der vorliegenden Erfindung war es daher, ein Werkzeug und ein Verfahren zur Verfügung zu stellen, welche die vorgenannten Nachteile nicht aufweisen.

Diese Aufgabe konnte überraschenderweise dadurch gelöst werden, dass anstelle der bisher eingesetzten Werkzeuge ein Werkzeug mit herausnehmbaren Trenneinsätzen eingesetzt wird. Die Einsätze weisen dieselben Oberflächenkonturen wie das Werkzeug auf und werden passgenau vorzugsweise unter Verwendung von Schnellspannvorrichtungen (z.B. mit pneumatischen oder magnetischen Vorrichtungen) eingelegt.

Gegenstand der Erfindung ist ein Werkzeug zur Herstellung von Mehrschichtkunststoffformteilen aus Kunststoffsubstrat und Beschichtungslack bestehend aus mindestens zwei Werkzeughälften und einer Kavität, in der der Kunststoff aufgenommen wird, und einem Angusssystem mit einem Angusskanal und
a) einem auswechselbaren Trennwerkzeugeinsatz mit einer permanenten oder semipermanenten Trennschicht oder
b) einem auswechselbaren Trennwerkzeugeinsatz bestehend aus einem permanent trennenden Material (z.B. Teflon(™)),
wobei der Trennwerkzeugeinsatz den an die Kavität für den Lack angrenzenden Teil des Angusssystems bildet.

Ein weiterer Gegenstand der Erfindung ist ein Verfahren zur Herstellung von Mehrschichtkunststoffformteilen aus Kunststoffsubstrat und Beschichtungslack nach Anspruch 4. Im Folgenden werden der Lack, und das Reaktionsgemisch zur Erzeugung eines Lackes gemeinsam Lack oder Lacksystem genannt.

Das Formen des Substrates unter Schritt i) erfolgt vorzugsweise mittels Spritzgusstechnologie durch Spritzgießen, Spritzprägen, Pressen, Schäumen oder Reaktionsspritzgießen. Das Beschichten des Substrates unter Schritt iii) erfolgt vorzugsweise mittels Reaction Injection Molding (RIM)-Verfahren, insbesondere unter Verwendung von Lacken (z.B. Zweikomponenten-Reaktionsgemischen), beispielsweise auf Basis von aromatischen Polyurethansystemen, Polyharnstoffsystemen oder aliphatischen Polyurethansystemen.

Die Vorteile des erfindungsgemäßen Werkzeuges und des erfindungsgemäßen Verfahrens bestehen unter anderem darin, dass Werkzeugeinsätze mit guten Trenneigenschaften an den im Hinblick auf die Trennung des Formteils vom Werkzeug kritischen Stellen verwendet werden können. Dies gilt für den Angussbereich aber auch für Überlaufkanäle, Dichtkanten oder für die formgebende Oberfläche der Formwerkzeuge oder Teile derselben. Weiterhin sind Werkzeugeinsätze preiswerter, so dass bei Verlust der Trennwirkung oder Beschädigung nur der Trennwerkzeugeinsatz ausgetauscht und nicht das gesamte Werkzeug ausgetauscht oder repariert werden muss. Die zeitliche Verfügbarkeit des Werkzeuges erhöht sich deutlich.

Ebenfalls ist es möglich, mehrere Werkzeugeinsätze parallel zu nutzen. Die Aufbringung einer Trennschicht kann außerhalb des Werkzeugs erfolgen. Bei Verlust der Trennwirkung wird ein neu beschichteter Einsatz für einen alten, abgenutzten Einsatz eingesetzt.

Das Einbringen des Einsatzes in das Werkzeug kann beispielsweise mittels eines Roboters in Verbindung mit einem entsprechenden Adapter-System erfolgen. Ein Adapter-System kann ein Schnellkupplungssystem enthalten, das beispielsweise mittels Unterdruck oder über einen elektrischen Magneten den Werkzeugeinsatz im Formwerkzeug fixiert. Zum Wechseln des Einsatzes wird der Magnet oder der Unterdruck entastet, und der Einsatz kann leicht entnommen werden.

Ferner kann das Werkzeug über eine Vorrichtung zur Messung der Entformungskraft verfügen. Die Messvorrichtung für die Entformungskraft ist mit einem Mechanismus gekoppelt, der, sobald eine erhöhte Entformungskraft festgestellt wird, einen Mechanismus startet, der automatisch den Trennwerkzeugeinsatz gegen einen neuen austauscht.

Als Material für den Trennwerkzeugeinsatz eigenen sich alle Werkstoffe, die die erforderliche Oberflächenqualität und Festigkeit besitzen. Besonders geeignet sind Stahl und entsprechende Legierungen.

Der Trennwerkzeugeinsatz bildet den an die Kavität für den Lack angrenzenden Teil des Angusssystems. Dies hat den Vorteil, dass dieser Bereich von externem Trennmittel frei gehalten werden kann und somit beim Einspritzen des Lackes durch das Einströmen des Lackes kein Trennmittel mitgerissen wird und in die Grenzschicht zwischen Substrat und Lack gelangt. In diesem Fall sind die Anforderungen an den Trennwerkzeugeinsatz hinsichtlich Oberflächenqualität und Festigkeit geringer.

Als trennende Beschichtungsmaterialen auf dem Trennwerkzeugeinsatz eigenen sich alle Materialien und Beschichtungen, die eine ausreichende Trennwirkung gegenüber dem verwendeten Lacksystem haben und eine ausreichende Standzeit besitzen.

Es können insbesondere die im Stand der Technik bekannten permanenten Trennschichten für Lacksysteme, insbesondere PUR-Systeme eingesetzt werden.

Weiterhin können semipermanente Trennlacke auf die Trennwerkzeugeinsätze aufgebracht werden. Beispielsweise eignen sich reaktive und Lösungsmittel enthaltende Silikon-PolymerSysteme die mittels Sprühen, Tauchen oder Streichen auf den Trennwerkzeugeinsatz aufgetragen werden. Nach Verlust der Trennwirkung kann der Trennwerkzeugeinsatz leicht wieder gereinigt und wiederbeschichtet werden. Derartige Systeme werden u.a. unter dem Handelsnamen Renodiv von der Firma Rhein Chemie Rheinau GmbH, Mannheim kommerziell angeboten.

Ferner können beispielsweise permanente Chrom-Nickel-Beschichtungen, Verchromungen, Nickel-, Nickelfluoridbeschichtungen und polymere Beschichtungen aufgebracht werden. Gradierte Schichten und mehrlagige Schichten insbesondere zur Verbesserung der Standzeit sind möglich. Als Beschichtungsverfahren eignen sich u.a. chemische Verfahren, galvanische Verfahren, vakuumbasierte Beschichtungsverfahren (z.B. physical vapor deposition-Beschichtungsverfahren) und Plasma-Beschichtungsverfahren.

Auch können Trennwerkzeugeinsätze oder deren Oberflächenschicht aus Materialien mit einer niedrigen Oberflächenspannung eingesetzt werden. Beispielsweise können Fluorpolymere (z.B. Teflon) oder Polyolefine (z.B. Polyethylen, Polypropylen) Verwendung finden.

In einer weiteren Ausführungsform wird als Trennwerkzeugeinsatz beispielsweise im Angusssystem, in der Trennkante oder als Teil von Überlaufkanälen eine dünne Folie oder ein Plättchen eingelegt. Das eingelegte Material erfordert keine gesonderte Trenneigenschaften, denn der Einsatz wird unmittelbar vor der Formteilherstellung, z.B. mit einem Roboter, eingelegt und mit dem Formteil entformt. Der Trennwerkzeugeinsatz wird mit dem daran anhaftenden Anguss oder dem überlaufenden Lack vom eigentlichen Formteil abgetrennt und könnte gegebenenfalls nach entsprechender Aufbereitung wieder verwendet werden.

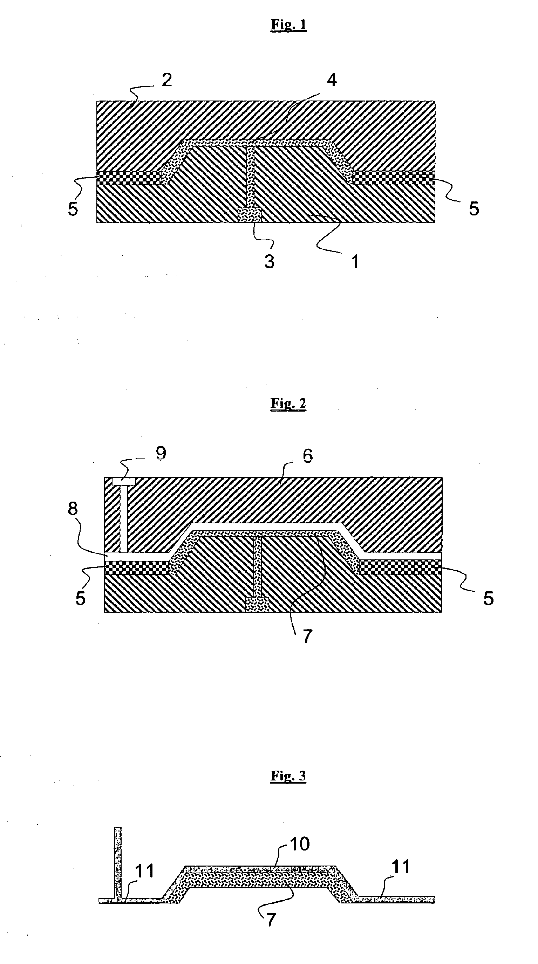

Die Erfindung soll anhand der nachfolgenden Figuren näher erläutert werden. Die Figuren 1 bis 3 zeigen den prinzipiellen Verfahrensablauf. In Figur 1 ist ein Spritzgießwerkzeug zur Herstellung des Substrates bestehend aus einer ersten (1) und einer zweiten Werkzeughälfte (2) dargestellt. Das Substrat wird über den Angusskanal (3) in die Substratkavität (4) gespritzt. Seitlich der Substratkavität befinden sich die Trennwerkzeugeinsätze (5).

Nachdem das Substrat eine ausreichende Festigkeit erreicht hat, wird die zweite Werkzeughälfte (2) gegen eine dritte Werkzeughälfte (6) ausgetauscht (Figur 2). Die dritte Werkzeughälfte (6), die Trennwerkzeugeinsätze (5) und das erstarrte Substrat (7) bilden nun die Kavität (8) für den Lack. Externes Trennmittel muss gegebenenfalls auf die innere Oberfläche der Werkzeughälfte (6), nicht aber auf den Trennwerkzeugeinsatz aufgebracht werden. Über das Angusssystem (9) wird der Lack in die Kavität für die Beschichtungsschicht (8) eingefüllt.

Nachdem der Lack ausgehärtet ist, kann das in Figur 3 dargestellte beschichtete Bauteil (Formteil) entformt werden. Das Formteil besteht aus dem Substratmaterial (7), dem Lack (10) und seitlichen Überständen (11), die nach der Entformung vom Formteil abgetrennt werden.

## Patentansprüche

1. Werkzeug zur Herstellung von Mehrschichtkunststoffformteilen aus Kunststoffsubstrat (7) und Beschichtungslack (10) bestehend aus mindestens zwei Werkzeughälften (1,2) und einer Kavität, in der der Kunststoff aufgenommen wird, und einem Angusssystem (9) mit einem Angusskanal **dadurch gekennzeichnet, dass**
a) einen auswechselbaren Trennwerkzeugeinsatz (5) mit einer permanenten oder semipermanenten Trennschicht oder
b) einen auswechselbaren Trennwerkzeugeinsatz (5) bestehend aus einem permanent trennenden Material,
wobei der Trennwerkzeugeinsatz (5) den an die Kavität (8) für den Lack (10) angrenzenden Teil des Angusssystems bildet.

2. Werkzeug nach Anspruch 1, **dadurch gekennzeichnet, dass** der Trennwerkzeugeinsatz (5) mit einem semipermanenten reaktiven Silikonpolymer beschichtet ist.

3. Werkzeug nach Anspruch 1, **dadurch gekennzeichnet, dass** der Trennwerkzeugeinsatz (5) mittels einer pneumatischen oder magnetischen Vorrichtung im Werkzeug gehalten wird.

4. Verfahren zur Herstellung von Mehrschichtkunststoffformteilen aus Kunststoffsubstrat (7) und Beschichtungslack (10) mit einem Werkzeug gemäß einem der Ansprüche 1-3, umfassend die folgenden Schritte:
i) Formen eines Substrates (7) in einer ersten Kavität (4) eines Formwerkzeuges,
ii) Ausbilden einer zweiten Kavität (8), indem das in i) hergestellte Substrat (7) in ein zweites Formwerkzeug eingebracht wird oder indem eine Werkzeughälfte (1) des Formwerkzeugs zusammen mit dem in i) hergestellten Substrat (7) in ein zweites Formwerkzeug eingebracht wird oder indem eine zweite Kavität (8) auf der Oberseite des Substrates durch eine teilweise Werkzeugöffnung erzeugt wird,
iii) Beschichten des gemäß i) hergestellten Substrates (7) in der zweiten Kavität (8) mit einem Lack oder einem Reaktionsgemisch zur Erzeugung eines Lackes (10), wobei der Lack (10) oder das Reaktionsgemisch zur Erzeugung eines Lackes (10) über ein Angusssystem (9) mit einem Angusskanal und einem auswechselbaren Trennwerkzeugeinsatz (5), der den an die Kavität (8) für den Lack (10) angrenzenden Teil des Angusssystems (9) bildet, zugeführt wird,
iv) Entformen des unter iii) hergestellten Formteils und gegebenenfalls Abtrennen der Formteilüberstände (11),
v) Austausch des Trennwerkzeugeinsatzes (5) bei Nachlassen der Trennwirkung des Einsatzes durch Verschleiß oder Beschädigung.

5. Verfahren nach Anspruch 4, **dadurch gekennzeichnet, dass** die Beschichtung gemäß Schritt iii) nach dem Reaction Injection Molding (RIM)-Verfahren durchgeführt wird.

6. Verfahren nach Anspruch 4, **dadurch gekennzeichnet, dass** das Formen des Substrates (7) gemäß Schritt i) mittels Spritzgießen, Spritzprägen, Pressen, Schäumen oder Reaktionsspritzgießen erfolgt.

7. Verfahren nach Anspruch 4, **dadurch gekennzeichnet, dass** ein radikalisch, ionisch oder über Polyaddition härtendes Reaktionslacksystem verwendet wird.

8. Verfahren nach Anspruch 4, **dadurch gekennzeichnet, dass** ein Polyurethansystem, ein Polyhamstoffsystem oder ein lösemittelfreies aliphatisches Polyurethansystem als Reaktionslacksystem verwendet wird.

## Claims

1. Mould for producing multilayer plastics mouldings made of plastics substrate (7) and coating (10) composed of at least two mould halves (1, 2) and of a cavity within which the plastic is received, and of a feed system (9) with a feed channel, **characterized in that** it comprises
a) a replaceable mould-release insert (5) with a permanent or semi-permanent separating layer or
b) a replaceable mould-release insert (5) composed of a permanently separating material,
where the mould-release insert (5) forms that portion of the feed system that adjoins the cavity (8) for the coating (10).

2. Mould according to Claim 1, **characterized in that** the mould-release insert (5) has been coated with a semi-permanent reactive silicone polymer.

3. Mould according to Claim 1, **characterized in that** the mould-release insert (5) is held by means of a pneumatic or magnetic device within the mould.

4. Process for producing multilayer plastics mouldings made of plastics substrate (7) and coating (10) using a mould according to any of Claims 1-3, encompassing the following steps:
i) moulding a substrate (7) in a first cavity (4) of a mould,
ii) forming a second cavity (8), by introducing the substrate (7) produced in i) into a second mould or by introducing one mould half (1) of the mould together with the substrate (7) produced in i) into a second mould, or by producing a second cavity (8) on the surface of the substrate through a partial mould opening,
iii) in the second cavity (8), coating of the substrate (7) produced according to i) with a coating or with a reaction mixture for producing a coating (10), where the coating (10) or the reaction mixture for producing a coating (10) is introduced by way of a feed system (9) with a feed channel and with a replaceable mould-release insert (5) which forms that portion of the feed system (9) that adjoins the cavity (8) for the coating (10),
iv) demoulding the moulding produced in iii) and optionally removing the projecting regions (11) of the moulding,
v) replacing the mould-release insert (5) if the separation provided by the insert has become less effective due to wear or damage.

5. Process according to Claim 4, **characterized in that** the coating in step iii) is carried out by the reaction injection moulding (RIM) process.

6. Process according to Claim 4, **characterized in that** the moulding of the substrate (7) in step i) takes place by means of injection moulding, injection-compression moulding, compression moulding, foaming or reaction injection moulding.

7. Process according to Claim 4, **characterized in that** a reactive coating system is used which cures by a free-radical mechanism or ionic mechanism or by way of polyaddition.

8. Process according to Claim 4, **characterized in that** the reactive coating system used comprises a solvent-free aliphatic polyurethane system or other polyurethane system, or a polyurea system.

## Revendications

1. Outil pour la production de pièces moulées en matière plastique multicouches à base d'un subjectile en matière plastique (7) et d'une peinture de revêtement (10), constitué d'au moins deux moitiés d'outil (1, 2) et d'une cavité dans laquelle la matière plastique est reçue, et d'un système de coulée (9) comportant un canal de coulée, **caractérisé en ce qu'**il comporte
a) un insert d'outil pour séparation amovible (5) comportant une couche de séparation permanente ou semi-permanente ou
b) un insert d'outil pour séparation amovible (5) constitué d'un matériau séparateur permanent,
l'insert d'outil pour séparation (5) constituant la partie adjacente à la cavité (8) pour la peinture (10) du système de coulée.

2. Outil selon la revendication 1, **caractérisé en ce que** l'insert d'outil pour séparation (5) est revêtu avec un polymère silicone réactif semi-permanent.

3. Outil selon la revendication 1, **caractérisé en ce que** l'insert d'outil pour séparation (5) est maintenu dans l'outil au moyen d'un dispositif pneumatique ou magnétique.

4. Procédé pour la production de pièces moulées en matière plastique multicouches à base d'un subjectile en matière plastique (7) et d'une peinture de revêtement (10) à l'aide d'un outil selon l'une quelconque des revendications 1 à 3, comprenant les étapes suivantes :
i) moulage d'un subjectile (7) dans une première cavité (4) d'un outil de moulage,
ii) formation d'une deuxième cavité (8) par le fait que le subjectile (7) produit en i) est introduit dans un deuxième outil de moulage ou par le fait qu'une moitié d'outil (1) de l'outil de moulage est introduite conjointement avec le subjectile (7) produit en i) dans un deuxième outil de moulage ou par le fait qu'une deuxième cavité (8) est engendrée sur la face supérieure du subjectile par une ouverture partielle de l'outil,
iii) enduction du subjectile (7) produit selon i) dans la deuxième cavité (8) avec une peinture ou un mélange réactionnel destiné à la production d'une peinture (10), la peinture (10) ou le mélange réactionnel destiné à la production d'une peinture (10) étant introduit(e) au moyen d'un système de coulée (9) comportant un canal de coulée et un insert d'outil pour séparation amovible (5) qui constitué la partie adjacente à la cavité (8) pour la peinture (10) du système de coulée (9),
iv) démoulage de la pièce moulée produite en iii) et éventuellement séparation des extrémités (11) de la pièce moulée,
v) remplacement de l'insert d'outil pour séparation (5) dans le cas d'une diminution de l'action séparatrice de l'insert, due à l'usure ou à un endommagement.

5. Procédé selon la revendication 4, **caractérisé en ce que** l'enduction selon l'étape iii) est effectuée selon le procédé de Reaction Injection Molding (RIM).

6. Procédé selon la revendication 4, **caractérisé en ce que** le moulage du subjectile (7) selon l'étape i) s'effectue par moulage par injection, moulage par injection-compression, pressage, moussage ou moulage par injection-réaction.

7. Procédé selon la revendication 4, **caractérisé en ce qu'**on utilise un système de peinture réactif durcissant par voie radicalaire, ionique ou par polyaddition.

8. Procédé selon la revendication 4, **caractérisé en ce qu'**on utilise comme système de peinture réactif un système polyuréthane, un système polyurée ou un système polyuréthane aliphatique sans solvant.
